# EUROPEAN PATENT APPLICATION

(11) **EP 3 034 924 A1**
(43) Date of publication of application: **22.06.2016**
(21) Application number: 15198590.0
(22) Date of filing: 09.12.2015
(51) Int. Cl.: F16L 55/17

(54) **FLANGE JOINT CONTAINMENT DEVICE**

(30) Priority: 11.12.2014 US 201462090771 P
(71) Applicant: Katch Kan Holdings Ltd., Edmonton, Alberta T6E 5C4 (CA)
(72) Inventor: HOLTBY, Quinn A.J., Alberta T6E 5CA (CA); GREENWOOD, Dallas L., Alberta T6E 5CA (CA)
(74) Representative: Rankin, Douglas

(57) **Abstract**

A device for containment of fluids escaping from a pipe flange, comprising a casing 14 extending between a first endplate 16 and a second endplate 18, the casing 14 having an exterior and interior; the first endplate 16 having a first flange 20 extending away from the first endplate exterior to the casing and the first flange surrounding a first pipe receiving opening; the second endplate 18 having a second flange 22 extending away from the second endplate exterior to the casing and the second flange surrounding a second pipe receiving opening; the first flange 20 having a first interior surface and a first seal 30 disposed around the first interior surface for sealing the casing to pipe and the second flange 18 having a second interior surface and a second seal 32 disposed around the second interior surface for sealing the casing to pipe; the casing being formed of sections (34, 36) connected together; a plurality of first supports 26 projecting from the first endplate and buttressing the first flange and a plurality of second supports 28 projecting from the second endplate and buttressing the second flange; and the casing having an exhaust port 40. The casing may include an access port providing access to leak detection equipment.

## Description

### TECHNICAL FIELD

Flange joint containment at a pipeline, particularly oil and gas pipelines.

### BACKGROUND

The inventors Dallas Greenwood and Quinn Holtby have been pioneers in the art of fluid containment, and have multiple patents for a variety of products used for fluid containment. Different oil and gas pipeline environments pose different issues for the skilled person. One such environment is the pipe flange joint.

### SUMMARY

There is disclosed a device for containment of fluids escaping from a pipe flange. In an embodiment, the device comprises a casing extending between a first endplate and a second endplate, the casing having an exterior and interior, the first endplate having a first flange extending away from the first endplate exterior to the casing and the first flange surrounding a first pipe receiving opening, the second endplate having a second flange extending away from the second endplate exterior to the casing and the second flange surrounding a second pipe receiving opening, the first flange having a first interior surface and a first seal disposed around the first interior surface for sealing the casing to pipe and the second flange having a second interior surface and a second seal disposed around the second interior surface for sealing the casing to pipe, the casing being formed of sections connected together, a plurality of first supports projecting from the first endplate and buttressing the first flange and a plurality of second supports projecting from the second endplate and buttressing the second flange; and the casing having an exhaust port. Other embodiments are disclosed and claimed.

### BRIEF DESCRIPTION OF THE FIGURES

Embodiments will now be described with reference to the figures, in which like reference characters denote like elements, by way of example, and in which:
Fig. 1 is a perspective view of an embodiment of a device for containment of substances escaping from a pipe flange;
Fig. 2 shows a side elevation view of the device of Fig. 1;
Fig. 3 shows a front elevation view of the device of Fig. 1;
Fig. 4 shows a cross-sectional view of the device of Fig. 3, taken along the line B-B; and
Fig. 5 shows a cross-sectional view of the device of Fig. 2, taken along the line A-A.

### DETAILED DESCRIPTION

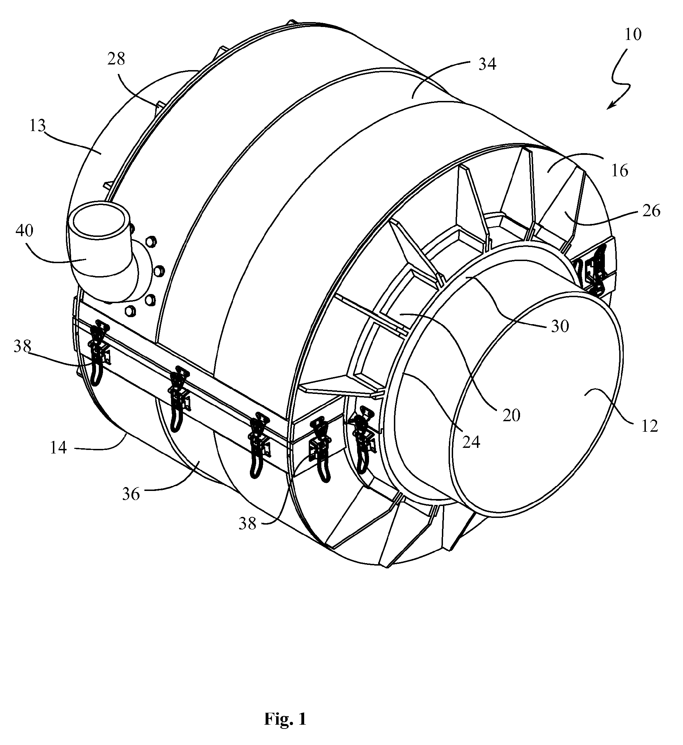

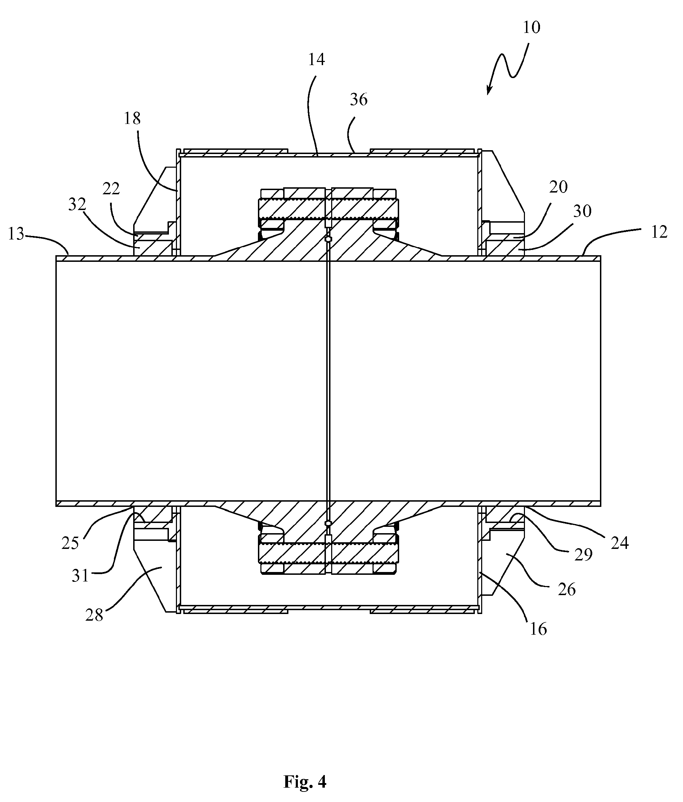

Referring to Fig. 1, there is shown a device 10 for containment of fluids escaping from a pipe flange joint (not shown in Fig. 1 but shown in Fig. 4). Pipes 12 and 13 may be for example embedded in the ground (not shown). The pipes 12 and 13 and device 10 may be backfilled with earth, for example dirt, sand, or gravel. The device 10 comprises a casing 14 that is designed to contain fluids that escape from the pipe flange joint and to protect the pipe 12 from the pressure of the backfilled earth, for example, protection from heaving of the ground.

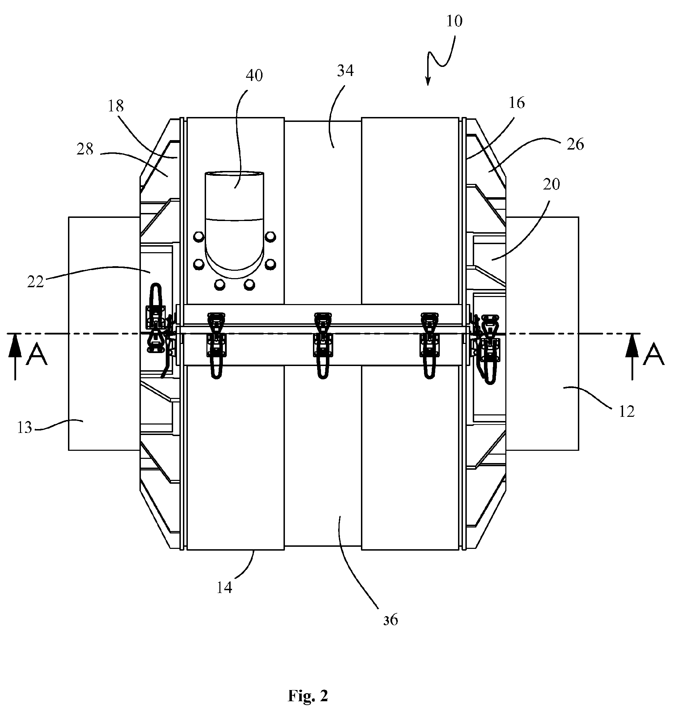

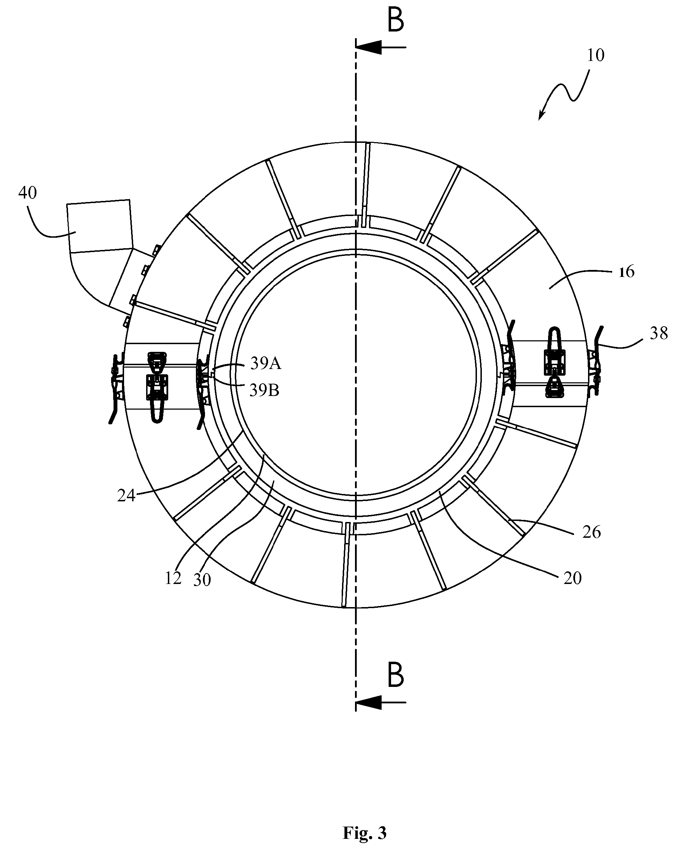

Referring to Fig. 2, casing 14 has a first endplate 16 and a second endplate 18. First endplate 16 and second endplate 18 have first flange 20 and second flange 22, respectively, which extend away from their respective endplate exterior to the casing 14. Referring to Fig. 3, first flange 20 surrounds a first pipe receiving opening 24 and second flange 22 surrounds a second pipe receiving opening 25. The first endplate 16 and the second endplate 18 have first supports 26 and second supports 28 spaced around the circumference of the flanges 20, 22, respectively.

First supports 26 and second supports 28 project outward from the end plates and connect to first flange 20 and second flange 22, respectively, and buttress the endplates 16 and 18 to provide support to the casing 14. Supports 26 and 28 brace the casing 14 to prevent the pressure of backfilled earth from heaving the device 10 and also to provide extra support to the casing 14 to protect against pressure buildup within the casing 14. The supports 26 and 28 may for example be trapezoidal or triangular in shape, and may be gussets. The supports 26 and 28 may be molded with the endplates 26, 28 and the flanges 20, 22, or may be welded together, or supported within slots, as for example shown in the figures where the flange contacting sides of the supports 26, 28 are received within slots on the flanges 20, 22.

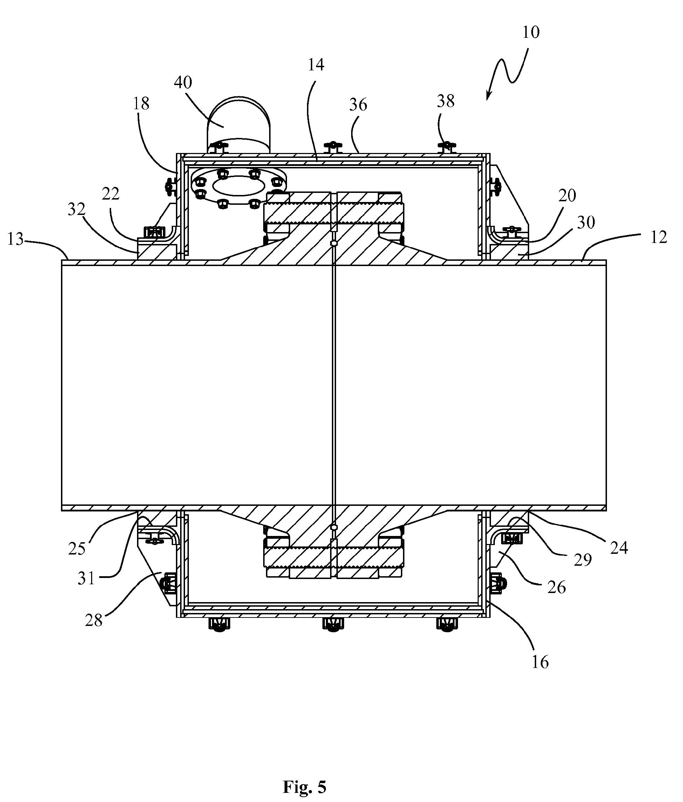

Referring to Figs. 4 and 5, first flange 20 has a first interior surface 29 and a first seal 30 disposed around the first interior surface 29 for sealing the casing 14 to pipe 12, and second flange 22 has a second interior surface 31 and a second seal 32 disposed around the second interior surface 31 for sealing the casing 14 to pipe 13. The seals 30 and 32 may be formed for example out of elastomeric material such as PTFE, polyethylene or fluoroelastomer or fibrous material.

The casing 14 is formed of sections, for example sections 34 and 36 connected together. Sections 34 and 36 may be for example two sections of casing 14, where casing 14 is divided along a cross-section which divides each of endplates 16 and 18 into two parts. Sections 34 and 36 may be connected together by connectors 38.

Connectors 38 may be attached to each of casing 14, endplates 16 and 18, and flanges 20 and 22. Connectors 38 may be latches. Referring to Fig. 3, the connectors 38 may hold edges of the sections 34 and 36 together with an overlapping tongue 39A and groove 39B arrangement to form a seal between sections 34 and 36 against undesired leakage from the casing 14. Tension from the connectors 38 may cause pressure on the seals 30 and 32. Connectors 38 may be for example made out of metal.

The casing 14 has an exhaust port 40. Exhaust port 40 may be disposed on an upper part of the casing 14 when the casing 14 is in use. The casing 14 may have an access port (not shown) providing access to leak detection equipment (not shown). The leak detection equipment may be monitored from above ground. The access port may be incorporated in the endplates 16 or 18, or in the casing, or in each of the casing and one of the endplates 16 and 18.

The casing 14 may be for example cylindrical and may for example be formed of plastic which could be molded or printed. The casing may have circumferential bands wrapped around the casing to provide extra strength. In use, the device 10 is oriented typically with the axis of the casing horizontal, and when underground has earth material (soil, sand, gravel, for example) packed around the casing, with the earth material pressing into the gaps between the supports 26, 28, thus helping to stabilize the device 10 in place.

The device 10 may also be used to contain other joints, pipes or fluid containing systems, and the casing shaped for the purpose, such as for example having a bend in the casing if the pipes are not aligned with each other.

In the claims, the word "comprising" is used in its inclusive sense and does not exclude other elements being present. The indefinite articles "a" and "an" before a claim feature do not exclude more than one of the feature being present. Each one of the individual features described here may be used in one or more embodiments and is not, by virtue only of being described here, to be construed as essential to all embodiments as defined by the claims. Immaterial modifications may be made to the embodiments described here without departing from what is covered by the claims.

## Claims

1. A device for containment of fluids escaping from a pipe flange, comprising:
a casing extending between a first endplate and a second endplate, the casing having an exterior and interior;
the first endplate having a first flange extending away from the first endplate exterior to the casing and the first flange surrounding a first pipe receiving opening;
the second endplate having a second flange extending away from the second endplate exterior to the casing and the second flange surrounding a second pipe receiving opening;
the first flange having a first interior surface and a first seal disposed around the first interior surface for sealing the casing to pipe and the second flange having a second interior surface and a second seal disposed around the second interior surface for sealing the casing to pipe;
the casing being formed of sections connected together;
a plurality of first supports projecting from the first endplate and buttressing the first flange and a plurality of second supports projecting from the second endplate and buttressing the second flange; and
the casing having an exhaust port.

2. The device of claim 1, further comprising an access port in the casing providing access to leak detection equipment.

3. The device of claim 2, wherein at least one of the casing, the first endplate and the second endplate incorporates the access port.

4. The device of any one of claims 1-3, wherein the casing is cylindrical.

5. The device of any one of claims 1-4, wherein the sections of the casing are connected together by one more connectors attached to the casing.

6. The device of any one of claims 1-5, wherein the sections of the casing are connected together by one or more connectors attached to the first endplate.

7. The device of any one of claims 1-6, wherein the sections of the casing are connected together by one more connectors, including one or more connectors being attached to one of the first flange and the second flange.

8. The device of any one of claims 1-7, wherein the connectors are latches.

9. The device of any one of claims 1-8, wherein the first supports and the second supports are each trapezoidal in shape.

10. The device of any one of claims 1-9, wherein, in use, the exhaust port is disposed on an upper part of the casing.
